# FASCICULE DE BREVET EUROPEEN

(11) **EP 4 022 400 B1**
(45) Date de publication et mention de la délivrance du brevet: **22.01.2025**
(21) Numéro de dépôt: 20764170.5
(22) Date de dépôt: 27.08.2020
(51) Int. Cl.: G04D 7/00

(54) **MÉTHODE ET SYSTÈME D'ASSISTANCE AU RÉGLAGE D'UNE PIÈCE D'HORLOGERIE MÉCANIQUE**
VERFAHREN UND SYSTEM ZUR UNTERSTÜTZUNG DER EINSTELLUNG EINER MECHANISCHEN UHR
METHOD AND SYSTEM FOR ASSISTING IN THE ADJUSTMENT OF A MECHANICAL TIMEPIECE

(30) Priorité: 29.08.2019 CH 10892019
(43) Date de publication de la demande: 06.07.2022
(73) Titulaire: Patek Philippe SA Genève, 1204 Genève (CH)
(72) Inventeur: VANDINI, Alessandro, 1228 Plan-les-Ouates (CH); MAIER, Frédéric, 1228 Plan-les-Ouates (CH)
(74) Mandataire: P&TS SA (AG, Ltd.)
(86) Numéro de dépôt international: PCT/IB2020/058024
(87) Numéro de publication internationale: WO 2021/038496

(56) Documents cités:
- EP-A1- 1 553 469
- EP-A1- 2 458 458
- EP-A1- 3 211 491
- WO-A1-2018/007978

## Description

### Domaine technique

La présente invention concerne une méthode d'assistance au réglage de différents mécanismes d'une pièce d'horlogerie mécanique ainsi qu'un système permettant la mise en oeuvre de la méthode.

### Etat de la technique

De nombreuses pièces d'horlogerie mécanique, en particulier les pièces d'horlogerie à grandes complications, nécessitent un réglage de différents mécanismes par l'utilisateur, qui peut s'avérer fastidieux ou complexe. Le réglage peut comprendre par exemple la mise à l'heure d'un mécanisme d'heures universelles ou d'une répétition minutes, le réglage d'une alarme, ou d'autres opérations selon le type de montres et de complications. Le réglage desdits mécanismes implique une suite d'opérations à effectuer sur la pièce d'horlogerie, par exemple à l'aide de la couronne, de boutons-poussoirs ou d'autres organes de réglage, et varie non seulement selon le mécanisme à régler mais aussi selon le modèle de la pièce d'horlogerie.

Pour le réglage de certains mécanismes, il est primordial d'effectuer cette suite d'opérations selon une séquence prédéfinie afin d'obtenir le réglage souhaité et d'éviter tout risque d'endommager le mécanisme. A cette fin, ces pièces d'horlogerie sont vendues avec un mode d'emploi qui comporte des indications précises sur le réglage des différents mécanismes. L'utilisation d'un mode d'emploi pour le réglage d'une pièce d'horlogerie peut s'avérer toutefois fastidieux et compliqué.

Il existe par ailleurs des systèmes pour le réglage automatique de l'heure affichée par une montre électronique analogique au moyen d'un smartphone.

EP2458458 concerne un procédé de mesure de précision d'une montre comportant un affichage visuel, selon lequel :
- on mémorise un premier instant auquel ledit affichage est dans une première position d'affichage correspondant à une première image, pour laquelle on détermine une première valeur d'affichage qui est stockée dans une mémoire en corrélation avec ledit premier instant ;
- après un intervalle de temps déterminé, on mémorise un deuxième instant auquel ledit affichage est dans une deuxième position d'affichage correspondant à une deuxième image pour laquelle on détermine une deuxième valeur d'affichage stockée dans la mémoire en corrélation avec ledit deuxième instant ;
- on calcule l'écart de marche dudit affichage, et on l'affiche sur des moyens de visualisation.

Ce procédé est destiné à la vérification des performances de marche d'une pièce d'horlogerie et à la mesure de sa précision. Il ne propose cependant aucune aide à l'utilisateur pour corriger ces performances ou pour régler le mécanisme.

WO2018/007978 concerne un procédé de mesure et d'affichage de données liées à l'activité physique d'une personne, comprenant :
- mesure de données liées à l'activité physique de la personne au moyen d'un capteur mécanique dans une montre bracelet;
- affichage des données mesurées sur le cadran de la montre-bracelet;
- prise d'image dudit cadran au moyen d'un appareil photo dans un équipement informatique;
- analyse de ladite image pour déterminer lesdites données;
- traitement desdites données pour traiter les données analysées;
- affichage des données traitées sur un écran de l'équipement informatique.

Ce procédé permet de transférer des données affichées sur le cadran d'une montre mécanique vers un équipement informatique, mais ne permet pas à l'utilisateur de déterminer comment régler le mécanisme de sa montre.

WO2018210029, par exemple, divulgue un système de correction automatique de l'heure d'une montre électronique avec affichage analogique par l'intermédiaire d'un smartphone. Celui-ci comprend une application informatique, qui lorsqu'elle est exécutée, allume la caméra du smartphone pour photographier le cadran du mouvement, analyse une image capturée pour obtenir le temps affiché du cadran, compare l'heure affichée avec l'heure à laquelle l'image a été capturée pour acquérir une différence de temps, et transmet cette différence de temps à la montre électronique via un module de communication sans fil afin d'ajuster la position des aiguilles selon l'heure à laquelle l'image a été capturée.

Ce type de correction automatique permet uniquement de régler l'heure de la montre, et uniquement pour des montres électroniques capables de communiquer avec un smartphone.

Un but de la présente invention est par conséquent de proposer une méthode d'assistance au réglage de mécanismes arbitraires d'une pièce d'horlogerie mécanique.

Un autre but de la présente invention est de proposer une méthode facile d'assistance au réglage d'une pièce d'horlogerie mécanique.

Un autre but de la présente invention est de proposer un support de données informatiques comportant un programme informatique pour mettre en oeuvre la méthode selon l'invention.

### Bref résumé de l'invention

Ces buts sont atteints grâce à une méthode telle que définie dans la revendication 1 indépendante annexée. Des réalisations préférées sont définies dans les revendications dépendantes 2 à 13.

La méthode présente l'avantage d'afficher des instructions personnalisées en fonction de l'état initial et de l'état final désiré du mécanisme, afin de recommander par exemple le nombre exact de tours de couronne et/ou de pressions sur un bouton-correcteur à effectuer pour obtenir le réglage désiré.

La méthode peut comprendre une étape d'identification du modèle de la pièce d'horlogerie.

Cette identification du modèle de la pièce d'horlogerie peut être effectuée par reconnaissance d'image à partir de ladite image ou séquence d'images.

La séquence d'instructions peut dépendre du modèle ainsi identifié.

Selon un mode d'exécution, l'identification du modèle de la pièce d'horlogerie capturée est effectuée par un système d'identification d'images configuré pour déterminer à quel modèle de montre enregistré dans une base de données stockée dans une mémoire du terminal informatique ou dans une mémoire d'un serveur distant accessible par ce terminal informatique correspond l'image de la pièce d'horlogerie capturée.

Cette identification du modèle de montre peut aussi être effectuée sur la base d'indications entrées par un utilisateur via une interface utilisateur, par exemple d'un choix dans un menu.

La séquence d'instructions peut comprendre par exemple un texte ou une vidéo préenregistré et restitué par le terminal informatique.

La séquence d'instructions peut comprendre un texte ou une vidéo généré dynamiquement à partir de ladite image ou séquence d'images. Dans ce cas, la séquence d'instructions est personnalisée et dépend des indications affichées par la pièce d'horlogerie.

La séquence d'instructions peut comporter une succession d'opérations à effectuer avec des organes de réglage tels que une ou plusieurs couronnes, une ou plusieurs tiges de remontoir, et un ou plusieurs boutons-correcteurs. Par exemple, la séquence d'instructions peut comporter une succession de manipulations à effectuer avec des organes de réglage afin d'amener la pièce d'horlogerie depuis un premier état représenté par les indicateurs de cette pièce vers un autre état désiré.

L'identification du modèle de pièce d'horlogerie peut être effectuée par sélection dans un menu présentant plusieurs modèles à choix.

L'identification du modèle de pièce d'horlogerie peut être utilisée afin de déterminer quels mécanismes de la montre peuvent être réglés.

L'identification du modèle de pièce d'horlogerie peut être utilisée afin de déterminer quelle séquence d'instructions doit être affichée.

L'identification du modèle de pièce d'horlogerie peut être utilisée afin d'afficher le modèle de la pièce d'horlogerie dans la zone d'affichage du terminal informatique avec la séquence d'instructions correspondante.

Plusieurs modèles de montre différents peuvent être associés à la même séquence d'instructions pour effectuer un réglage donné, par exemple lorsque les modèles se distinguent uniquement les uns des autres par des caractéristiques esthétiques ou font partie de la même collection.

La méthode peut comporter une étape de détermination du mécanisme à régler parmi plusieurs mécanismes de la pièce d'horlogerie.

Selon un mode d'exécution, la position initiale d'un indicateur lié au mécanisme à régler est détectée automatiquement par le terminal informatique. Cette détection peut impliquer une reconnaissance d'image.

Selon un mode d'exécution, la position initiale d'un indicateur lié au mécanisme à régler est indiquée manuellement par l'utilisateur via une interface utilisateur.

Selon un mode d'exécution, la position finale d'un indicateur lié au mécanisme à régler est détectée automatiquement par le terminal informatique. Cette détection peut impliquer la détermination d'un temps de référence, par exemple de l'heure courante lorsque l'indicateur est destiné à indiquer un élément de l'heure courante.

Selon un mode d'exécution, le temps de référence est donné par l'horloge du terminal informatique ou par un serveur distant.

Selon un mode d'exécution, la séquence d'instructions est affichée sous forme d'un texte explicatif à côté du modèle de la pièce d'horlogerie identifié.

Selon un mode d'exécution, la séquence d'instructions consiste en une séquence d'images indiquant les mouvements à effectuer sur un ou plusieurs organes de réglage sélectionnés parmi le groupe d'organe de réglage comprenant une ou plusieurs couronnes, une ou plusieurs tiges de remontoir et un ou plusieurs boutons-correcteurs.

La séquence d'instructions peut être affichée en réalité augmentée par-dessus l'image de la pièce d'horlogerie capturée avec le dispositif d'acquisition d'image.

Selon un mode d'exécution, le type de mécanisme à régler est sélectionné parmi le groupe de mécanismes comprenant l'affichage des heures, d'un quantième simple ou perpétuel, le mécanisme de sélection d'un fuseau horaire, le mécanisme d'affichage des phases de lune, de la configuration du ciel nocturne ainsi que les mécanismes d'activation/ désactivation d'une alarme, du réglage de l'heure de l'alarme et/ou les mécanismes astronomiques.

Par exemple, la séquence d'instructions peut consister en une séquence de corrections de l'heure et de la date d'un quantième simple, annuel ou perpétuel.

Selon un mode d'exécution, la séquence d'instructions consiste en une séquence d'opérations à effectuer avec des organes de réglage tels que une ou plusieurs couronnes, une ou plusieurs tiges de remontoir, et un ou plusieurs boutons-correcteurs afin d'amener l'heure et la date affichée par la pièce d'horlogerie depuis la position initiale représentée par ladite image vers une position correspondant à une heure et une date déterminée par le terminal informatique ou sélectionnée par un utilisateur à l'aide dudit terminal informatique.

Selon un mode d'exécution, le terminal informatique est un smartphone ou une tablette numérique ou un ordinateur.

Un autre aspect de l'invention porte sur un terminal informatique tel que défini dans la revendication indépendante 14 annexée.

Un autre aspect de l'invention porte sur un programme d'ordinateur tel que défini dans la revendication indépendante 15 annexée.

### Brève description des figures

Des exemples de mise en oeuvre de l'invention sont indiqués dans la description illustrée par les figures annexées dans lesquelles
- Les figures 1a-1c illustrent une vue de dessus d'une boite de montre d'une pièce d'horlogerie à quantième perpétuel ;
- La figure 2 illustre une vue schématique de la capture d'une image d'une pièce d'horlogerie par un terminal informatique, notamment un smartphone ;
- La figure 3 illustre une vue schématique du terminal informatique de la Figure 2 côté écran avec l'image capturée et une séquence d'instructions affichée sur l'écran selon une forme d'exécution de l'invention ;
- La figure 4 représente le terminal informatique de la figure 3 en communication avec un serveur distant selon une forme d'exécution de l'invention ;
- La figure 5 illustre une vue schématique du terminal informatique de la Figure 2 côté écran avec l'image capturée et une séquence d'instructions affichée sur l'écran selon une autre forme d'exécution de l'invention ;
- La figure 6 illustre une vue schématique d'une interface utilisateur selon une autre forme d'exécution de l'invention ; et
- La figure 7 illustre à titre d'exemple différentes étapes d'un procédé mis en oeuvre par un terminal informatique pour afficher une séquence d'instructions de réglage d'une pièce d'horlogerie.

### Exemple(s) de mode de réalisation de l'invention

Dans la présente demande, le mécanisme à régler peut être constitué par toute complication horlogère affichant toute fonction autre que l'indication de l'heure, de la minute et de la seconde. Il peut être adapté à une montre à remontage manuel ou automatique. Un mécanisme à régler selon l'invention peut par exemple être destiné à l'affichage des heures universelles, de l'heure dans une ville donnée, du jour de la semaine, du mois de l'année, d'un second fuseau horaire, d'un indicateur de réserve de marche, des phases de la lune. Le mécanisme à régler peut aussi avoir par exemple la fonction d'activation/désactivation d'une alarme, la fonction du réglage de l'heure de l'alarme ou d'une répétition minutes, ou des fonctions astronomiques comme la carte du ciel en un lieu donné, le numéro d'ordre de la semaine, ou un calendrier perpétuel.

Par ailleurs, dans le contexte de la présente demande, on entend par indicateur tout organe d'un mécanisme dont la position peut être corrigée pour correspondre à un temps de référence ou à une durée. Un indicateur peut par exemple être sous la forme d'une aiguille pour l'affichage des heures, des minutes, des secondes, d'un second fuseau horaire, de la date, du jour de la semaine ou du mois de l'année. L'indicateur peut également être sous la forme d'un disque pour l'affichage, au travers d'un guichet, par exemple de la date, du jour de la semaine, du mois de l'année ou des phases de la lune. L'indicateur peut aussi être un affichage présenté directement sur le cadran comme lorsqu'on montre la carte du ciel en un lieu donné.

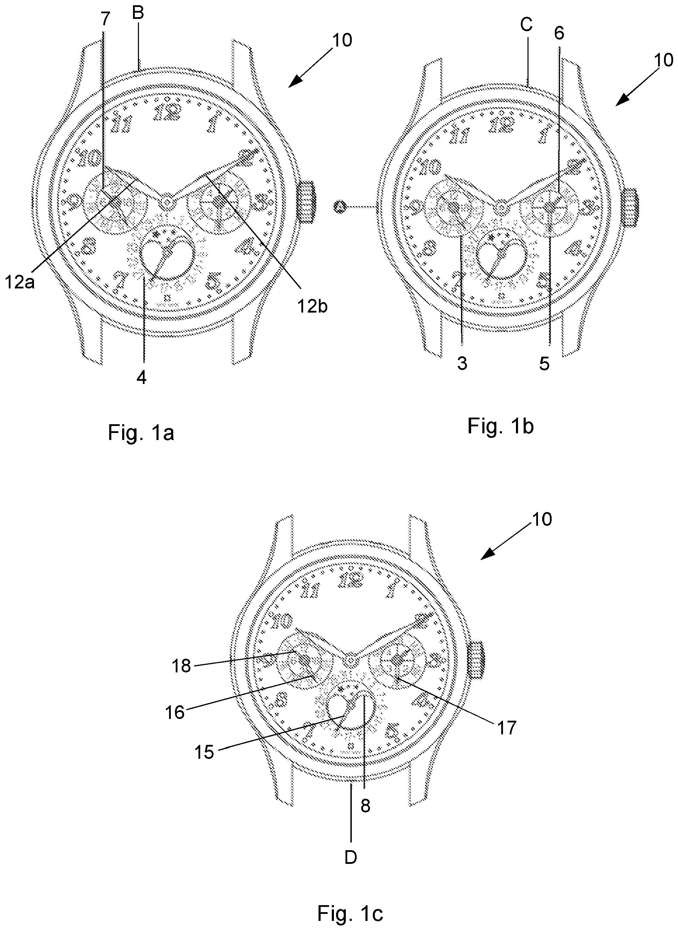

Dans un mode de réalisation tel qu'illustré aux figures 1a-1c, la méthode d'assistance au réglage d'un mécanisme est mise en oeuvre pour un quantième perpétuel comprenant un quantième perpétuel et un mécanisme d'affichage des phases de lune.

Pour régler les mécanismes on se réfère au mode d'emploi normalement fourni avec la pièce d'horlogerie qui comporte par exemple les indications suivantes en se référant aux figures 1a-1c.

Pour corriger la date 4, pressez autant de fois que nécessaire sur le bouton correcteur B situé entre 11h et 12h dans la boite de montre, jusqu'à l'affichage de la date désirée. Pour corriger simultanément l'affichage du mois 5 et l'affichage de l'année bissextiles 6, pressez autant de fois que nécessaire sur le bouton correcteur C situé entre 12h et 1h jusqu'à l'affichage de mois et du chiffre de l'année désirés (4 = année bissextile, 1 = 1^{er} année après une année bissextile, 2 = 2^{ème} année après une année bissextile, 3 = 3^{e} année après une année bissextile). Pour la correction des phases de lune, à chaque pression sur le bouton correcteur D situé à 6h, le disque de la lune 8 progresse d'un jour vers une nouvelle phase. Commencez par faire avancer le disque lunaire jusqu'à ce que la lune apparaisse au centre du guichet sous sa forme plaine. Pour positionner la lune sur sa phase exacte, pressez le bouton correcteur autant de fois qu'il y a de jours écoulés depuis la dernière pleine lune.

Au vu des multiples indications fournies pour le réglage, le réglage de certains mécanismes s'avère fastidieux puisqu'il est nécessaire d'avoir à disposition le mode d'emploi ou de devoir se connecter à Internet, par exemple pour la correction de l'affichage des phases de lunes qui peut s'effectuer à l'aide d'un calculateur qui indique la position angulaire du disque des phases de lune après avoir entré le jour, le mois et l'année dans les champs d'une interface utilisateur dédiée à cet effet.

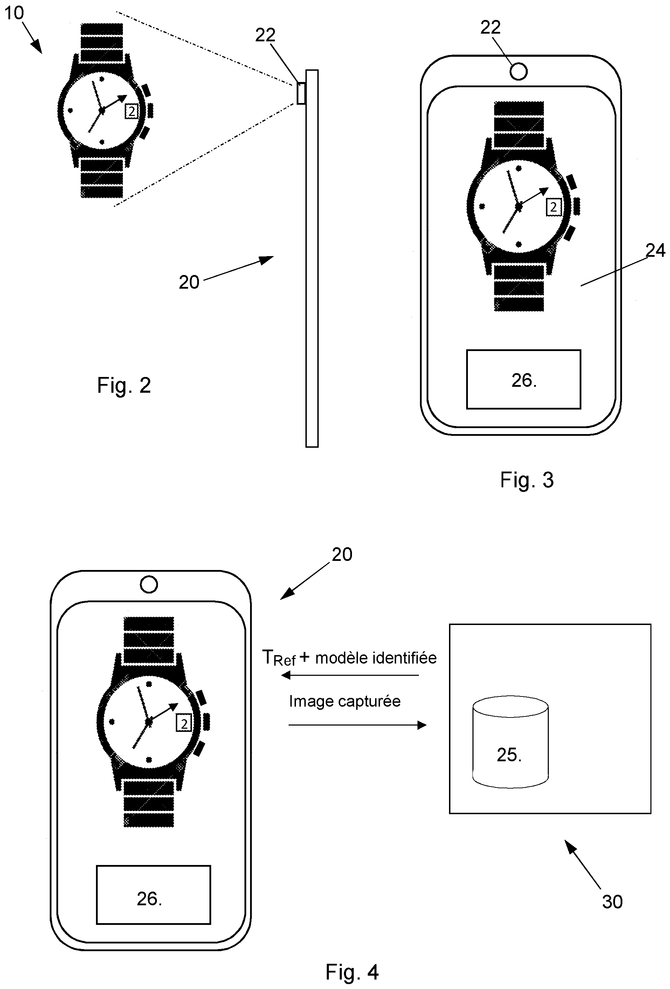

Afin de pouvoir effectuer aisément et de manière plus simple, facile, précise et sans risque le réglage de mécanisme de tout type, par exemple des mécanismes susvisés, et pour n'importe quel modèle de pièces d'horlogerie mécaniques 10, la méthode d'assistance au réglage, selon un premier aspect de l'invention, permet de régler un mécanisme à l'aide d'un terminal informatique, de préférence un smartphone 20, tel qu'illustré notamment aux figures 2 et 3, ou une tablette numérique ou un ordinateur. Le smartphone 20 ou la tablette numérique est pourvu d'un dispositif d'acquisition d'image 22, d'un écran comprenant une zone d'affichage 24 et comprenant, de manière conventionnelle, une mémoire pouvant stocker une application informatique dédiée à l'assistance au réglage de différents mécanismes de la pièce d'horlogerie mécanique 10 ainsi qu'un processeur, qui lorsqu'il exécute l'application informatique, permet de mettre en oeuvre la méthode d'assistance au réglage de la pièce d'horlogerie mécanique 10.

Cette méthode d'assistance permet d'afficher ou de restituer une séquence d'instructions, c'est-à-dire une séquence de manipulations des organes de réglage de la pièce d'horlogerie 10 qui est affichée sur l'écran du terminal informatique 20 et explique quels organes de réglage manipuler, et comment, afin d'obtenir le réglage désiré.

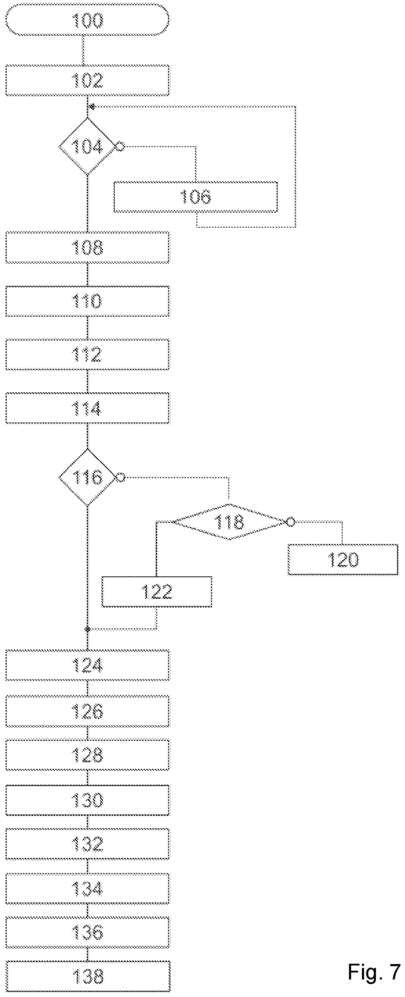

Des étapes du procédé de détermination d'une séquence d'instructions pour régler une pièce d'horlogerie 10 sont illustrées à titre d'exemple sur la figure 7. Ces étapes peuvent être mises en oeuvre par le terminal informatique 20 et/ou par un système comprenant un tel terminal informatique et un serveur à distance.

Au cours de l'étape 100, l'utilisateur souhaitant régler un mécanisme de sa pièce d'horlogerie, par exemple afin de corriger la position d'un indicateur, démarre une application informatique sur son terminal informatique, par exemple une application de correction mise à disposition par le fabricant de la pièce d'horlogerie.

Au cours de l'étape 102, l'application affiche sur la zone d'affichage 24 du terminal informatique 20 une invitation à filmer ou photographier la pièce d'horlogerie mécanique 10 à régler avec le dispositif d'acquisition d'image 22 de ce terminal informatique, de manière à capturer une image ou de préférence une séquence d'images de la pièce d'horlogerie 10.

Au cours de l'étape 104, l'application détermine si l'image capturée avec le dispositif d'acquisition d'image 22 correspond à l'image de la pièce d'horlogerie 10, par exemple à l'image de la face avant de cette pièce. L'application détermine en outre si la qualité de la séquence d'images est acceptable, ou si par exemple la vue est trop éloignée, trop proche, floue, trop peu lumineuse, trop peu contrastée, pas assez stable, et/ou si l'angle entre l'axe de visée et la face avant de la pièce de montre est trop éloigné de la perpendiculaire, etc. L'utilisateur est de préférence invité au cours de l'étape 106 à corriger la capture, par exemple en déplaçant le dispositif d'acquisition d'image 22, jusqu'à ce que la vue soit acceptable et qu'un nombre suffisant d'images ait pu être capturé sans présenter ces défauts. L'utilisateur peut aussi être invité à capturer plusieurs vues de la pièce d'horlogerie 10 depuis plusieurs directions, par exemple des vues perpendiculaires de la face avant, des vues prises depuis une direction oblique, et/ou des vues des faces latérales ou de la face arrière de la pièce d'horlogerie. Ces multiples vues depuis plusieurs directions facilitent par exemple la construction d'un modèle 3D de la pièce d'horlogerie, et permettent de faciliter la reconnaissance du modèle de pièce d'horlogerie, par exemple si ce modèle ou une indication correspondant à ce modèle est marquée sur le fond de la pièce d'horlogerie.

Au cours de l'étape 108, l'image ou la séquence d'image de qualité acceptable est sauvegardée, puis prétraitée. Ce prétraitement peut aussi être effectué au moins en partie avant la détection de prise de vue acceptable. Le prétraitement peut comprendre par exemple une correction de luminosité, de contraste, de balance de blanc, un recadrage, etc.

Au cours de l'étape 110, un modèle 2D ou de préférence 3D de la pièce d'horlogerie 10 est généré à partir de la séquence d'images capturées.

Au cours de l'étape 112, des caractéristiques de la pièce d'horlogerie et/ou des indicateurs de cette pièce sont extraites à partir du modèle, ou directement à partir d'une ou plusieurs images. Ces caractéristiques correspondent par exemple à des points clés de la pièce, par exemple le centre du cadran, l'extrémité des indicateurs, ou d'autres portions des images.

Au cours de l'étape 114, le modèle de la pièce d'horlogerie 10 est ensuite identifié, par exemple sur la base du modèle déterminé précédemment, et/ou des caractéristiques extraites.

L'identification du modèle de la pièce d'horlogerie peut mettre en oeuvre un procédé de reconnaissance d'image afin de déterminer le modèle de pièce photographié ou filmé. Le procédé de reconnaissance d'image peut par exemple comparer l'image ou la séquence d'images de la pièce d'horlogerie, ou une des caractéristiques extraites de cette image, avec les données correspondantes d'une série de modèles de pièces d'horlogerie enregistrée dans une base de données stockée dans la mémoire du terminal informatique 20.

Le modèle de pièce d'horlogerie peut aussi être déterminé par comparaison entre le modèle ou les caractéristiques du modèle et des données correspondantes dans une base de données 25 stockée dans une mémoire d'un serveur distant 30 accessible par le terminal informatique via un module de communication sans fil (figure 4). Dans ce cas, le serveur 30 exécute un programme de classification, par exemple basé sur un réseau neuronal, pour classer les données reçues et déterminer à quel modèle de montre elles correspondent, en se basant sur les données de référence enregistrées dans la base de données 25 stockée dans une mémoire du serveur 30. Le serveur identifie ainsi le modèle correspondant et transmet les données relatives au modèle identifié au terminal informatique 20.

Dans un autre mode de réalisation, le modèle de pièce d'horlogerie est sélectionné par l'utilisateur, par exemple dans une liste, ou déterminé par défaut sur la base d'un profil d'utilisateur ou d'un fichier indiquant le ou les modèles de pièce d'horlogerie détenus par l'utilisateur, ou encore de manière implicite lorsque l'application est démarrée.

Au cours de l'étape 116, l'application informatique vérifie si elle dispose d'un module lui permettant de générer une séquence d'instructions pour le modèle de pièce d'horlogerie identifié. Lorsque ce module est disponible, elle poursuit avec l'étape 124 décrite plus loin. Lorsque le module informatique correspondant n'est pas disponible dans le terminal informatique, l'application vérifie si ce module est disponible pour le téléchargement (étape 118). Lorsqu'aucun module n'est disponible, par exemple parce que le mode d'emploi électronique n'existe pas pour le modèle de montre identifié, l'application s'arrête au cours de l'étape 120. Dans le cas contraire, le module manquant est téléchargé au cours de l'étape 122, soit de manière automatique et transparente pour l'utilisateur, soit après une confirmation. Le téléchargement de ce module peut être facturé.

Au cours de l'étape 124, l'application permet ensuite de sélectionner, via une interface utilisateur, le type de mécanisme à régler parmi plusieurs mécanismes du modèle de la pièce d'horlogerie identifié. Cette détermination peut être implicite, par exemple si le modèle identifié comporte une seule complication permettant un réglage, ou un seul mécanisme nécessitant un réglage à un instant donné.

Le réglage à effectuer peut viser par exemple à corriger la position d'un indicateur, par exemple afin de faire correspondre cet indicateur affiche un temps de référence, par exemple le temps actuel, ou le temps actuel d'un autre fuseau horaire.

La correction peut aussi viser à modifier la position d'un indicateur de manière à afficher un temps choisi par l'utilisateur, par exemple un temps dans un autre fuseau horaire, une heure d'alarme, une sélection de fuseau horaire, etc.

Au cours de l'étape 126, l'application détermine l'état initial du mécanisme sélectionné, par exemple en déterminant la position initiale d'un ou plusieurs indicateurs du mécanisme. Par exemple, lorsque le mécanisme à corriger correspond au mécanisme d'affichage de l'heure courante, cette étape peut comprendre la détermination de l'heure affichée par la pièce d'horlogerie. Cette détermination peut être effectuée par analyse des images capturées, du modèle ou des caractéristiques extraites de ces images.

Par exemple, selon les figures 1a-1c, la position des aiguilles de l'heure et des minutes 12a, 12b, du disque des phases de lune 8, et des aiguilles 15, 16, 17, 18 indiquant respectivement la date, le jour de la semaine, le mois de l'année et un indicateur 24 heures peut être déterminée automatiquement par analyse d'image ou à partir des caractéristiques extraites du modèle déterminé au cours de l'étape 110.

La position initiale d'un ou de plusieurs indicateurs déterminée automatiquement peut être corrigée manuellement, par exemple lorsque le système de reconnaissance détecte une indication imprécise ou erronée, par exemple en raison d'erreur de parallaxe.

Il est cependant à noter que l'invention permet souvent de déterminer la position initiale des indicateurs avec une plus grande précision que celle qui est offerte par une vérification manuelle. Ainsi, la position d'un indicateur de lune est souvent difficile à déterminer au jour près, en sorte que l'utilisateur ignore la correction exacte qui doit être effectuée. L'image capturée par le terminal informatique peut en revanche être agrandie et des mesures d'angle ou de surface peuvent être effectuées pour déterminer avec une précision importante cette position initiale, et éviter ainsi le risque de proposer une correction inappropriée.

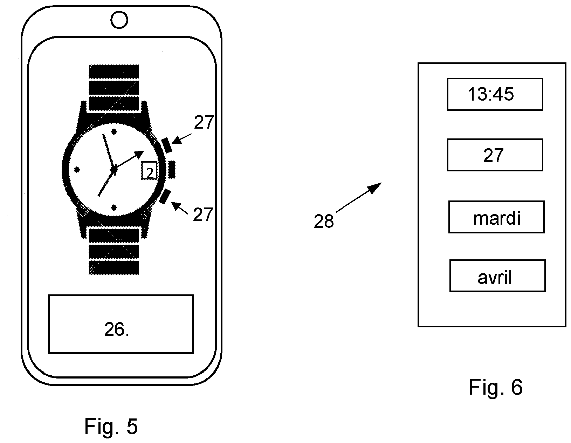

Alternativement, ou en option, l'utilisateur entre manuellement, via une interface utilisateur, les indications relatives à la position initiale d'un ou plusieurs indicateurs à régler. Par exemple, selon la figure 6, l'heure, la date, le jour de la semaine et le mois de l'année peuvent être entrés manuellement par l'utilisateur dans les champs correspondants de l'interface utilisateur 28.

Au cours de l'étape 128, l'application détermine l'état final vers lequel la correction doit amener le mécanisme. Cet état final peut par exemple correspondre à un temps de référence, notamment lorsque le mécanisme affiche une indication temporelle.

Le temps de référence peut correspondre par exemple à l'heure courante au lieu où se trouve l'utilisateur, ou dans un autre lieu. Cette heure courante peut être donnée, par exemple, par l'horloge interne du terminal informatique 20 et peut correspondre à l'heure à laquelle l'image ou la séquence d'images a été capturée par le dispositif d'acquisition d'image 22, ou à l'heure courante. Selon une variante d'exécution, les données relatives au temps de référence peuvent être transmises au terminal informatique 20 par un serveur distant, par exemple le serveur 30 avec les données relatives au modèle de la pièce d'horlogerie 10 identifié comme illustré la figure 4.

L'application informatique permet ensuite de déterminer au cours de l'étape 130 une séquence d'instructions 26 de réglage du mécanisme sélectionné. La séquence 26 est déterminée en fonction du modèle de la pièce d'horlogerie identifié, par exemple afin que la position d'au moins un indicateur de la fonction corresponde à l'état final déterminé précédemment. Elle indique par exemple le nombre de pressions à effectuer sur un ou plusieurs boutons, le nombre de rotations de la couronne, etc., et l'ordre de ces manipulations.

Cette séquence d'instructions peut être générée dynamiquement en fonction de l'état initial et de l'état final de la pièce d'horlogerie. Elle peut aussi être préenregistrée et indépendante de l'état initial et/ou de l'état final.

Cette séquence d'instructions 26 est affichée au cours de l'étape 132 sur la zone d'affichage 24 du terminal informatique 20.

Selon une forme d'exécution avantageuse, l'application informatique est configurée pour repérer automatiquement la position initiale d'un indicateur du mécanisme sélectionné et pour afficher la séquence d'instructions pour ce mécanisme en fonction de la différence entre le temp donné par la position d'un indicateur de la fonction sélectionnée et le temps de référence.

L'affichage d'une séquence d'instructions pour le réglage du mécanisme sélectionné en fonction du modèle de la pièce d'horlogerie 10 identifié afin que la position de l'indicateur de la fonction corresponde au temps de référence peut revêtir différentes formes. Par exemple, la séquence d'instructions peut être affichée sous la forme d'un texte explicatif, par exemple à côté du modèle de la pièce d'horlogerie 10 identifiée, telle qu'illustrée par la figure 3. Dans un autre mode de réalisation, la séquence d'instructions peut comprendre une suite de schémas. Dans encore un autre mode de réalisation, la séquence d'instructions peut comprendre une séquence vidéo animée, par exemple une animation générée automatiquement en fonction du modèle de montre sélectionné, du mécanisme sélectionné, de la position initiale de l'indicateur à corriger, et/ou de la position finale de cet indicateur. La séquence vidéo animée peut montrer par exemple le mouvement à effectuer sur différents organes de commande de la pièce d'horlogerie (par exemple une pression sur un bouton-poussoir, une rotation de la couronne, un déplacement axial de la tige de remontoir, etc.), ainsi que l'effet de ces mouvements sur les indicateurs de la montre. Dans un autre mode, ou en addition, ces indications de réglage peuvent être des indications sonores accompagnées ou non d'images.

Les instructions sont avantageusement affichées en réalité augmentée par-dessus l'image de la pièce d'horlogerie. Le positionnement des instructions est de préférence adapté pour tenir compte de la position et de l'orientation de la pièce dans l'image ; les instructions peuvent par exemple comprendre la mise en évidence sur l'image de de la pièce d'un organe à manipuler, par exemple une couronne ou un bouton-poussoir, ou d'un organe à observer, par exemple un indicateur.

La séquence d'instructions peut être une représentée sous la forme d'une animation, par exemple d'une séquence de textes, de pictogrammes et/ou d'images. Cette animation peut être affichée en superposition sur l'image de la pièce. L'animation peut défiler automatiquement, ou à l'aide d'un élément d'interface graphique permettant de contrôler le défilement.

Le défilement de l'animation peut aussi être synchronisé avec l'image capturée, de manière à ce qu'une manipulation sur la pièce d'horlogerie effectuée conformément à une instruction produise l'affichage de l'instruction suivante.

Selon une alternative, illustré à la figure 5, la séquence d'instructions 26 est affichée sous forme d'un texte explicatif à côté du modèle de la pièce d'horlogerie 10 identifiée en combinaison avec des indications 27 disposées en relation avec le modèle affiché afin d'indiquer à quel organe de réglage se réfère le texte explicatif.

L'affichage se termine au cours de l'étape 132.

Le procédé peut comporter une étape 136 de vérification automatique de la correction effectuée. A cet effet, l'application informatique peut inviter l'utilisateur à filmer ou photographier la pièce d'horlogerie après la correction, puis effectuer une vérification de la position des indicateurs après la correction pour s'assurer que leur position correspond à la position finale choisie ou à au temps actuel lors de la vérification.

Dans un mode de réalisation, la pièce d'horlogerie est spécialement conçue de manière à faciliter la détermination de la position initiale et/ou finale des indicateurs à corriger. A cet effet, les indicateurs et/ou le cadran peuvent comporter des marquages spécialement réalisés dans le but de faciliter leur détection et la détermination leur position relative. Ces marquages peuvent être réalisés dans une longueur d'onde peu visible pour l'utilisateur.

Le procédé se termine à l'étape 138.

Certaines étapes ci-dessus sont optionnelles, et au moins les étapes qui ne figurent pas dans la revendication 1 sont optionnelles. Par ailleurs, l'ordre de ces étapes peut être modifié.

Selon un autre aspect de l'invention, l'application informatique est en outre configurée pour identifier un code unique, par exemple un numéro de série, propre à la pièce d'horlogerie, à partir de la séquence d'images prise par le dispositif d'acquisition d'images 22 du terminal informatique 20. Cette identification peut être utilisée afin de déterminer une séquence d'instructions personnalisées, par exemple en fonction de l'année de fabrication, du lieu d'achat afin de déterminer le fuseau horaire de référence, ou d'autres préférences dépendant du modèle de pièce, de l'utilisateur ou du lieu ou de la date d'achat.

## Revendications

1. Méthode mise en oeuvre par un terminal informatique (20) pour l'assistance à un utilisateur au réglage d'un mécanisme d'une pièce d'horlogerie mécanique (10) comportant au moins une fonction et un affichage d'une valeur liée à cette fonction, la méthode comprenant les étapes suivantes :
- capturer une image ou une séquence d'images de la pièce d'horlogerie mécanique (10) au moyen du terminal informatique (20) comprenant un dispositif d'acquisition d'image (22) et une zone d'affichage (24);
- déterminer le réglage à effectuer du mécanisme de cette fonction au regard de ladite image ou séquence d'images, et
- afficher sur la zone d'affichage (24) du terminal informatique (20) une séquence d'instructions à effectuer par l'utilisateur sur la pièce d'horlogerie pour ledit réglage dudit mécanisme.

2. Méthode selon la revendication 1, comprenant une étape d'identification du modèle de la pièce d'horlogerie mécanique (10), la séquence d'instructions dépendant de ce modèle.

3. Méthode selon la revendication 2, dans laquelle ladite identification du modèle de la pièce d'horlogerie (10) est effectué par reconnaissance d'image à partir de ladite image ou séquence d'images.

4. Méthode selon l'une des revendications 1 à 3, comprenant une étape de détermination du mécanisme à régler parmi plusieurs mécanismes de la pièce d'horlogerie (10) pouvant être réglés par un utilisateur.

5. Méthode selon la revendication 4, le réglage à effectuer étant déterminé afin que la position d'un indicateur dudit mécanisme à régler corresponde à un temps de référence indiqué par l'utilisateur ou déterminé automatiquement.

6. Méthode selon la revendication 5, dans laquelle le temps de référence est donné par l'horloge du terminal informatique (20) ou par un serveur distant (30).

7. Méthode selon l'une des revendications 2 à 6, dans laquelle le modèle de la pièce d'horlogerie (10) identifié est affiché dans la zone d'affichage (24) du terminal informatique (20) avec la séquence d'instructions pour le réglage du mécanisme.

8. Méthode selon l'une des revendications 1 à 7, ladite séquence d'instructions comprenant un texte ou une vidéo préenregistré et restitué par ledit terminal informatique.

9. Méthode selon l'une des revendications 1 à 7, ladite séquence d'instructions comprenant un texte ou une vidéo généré dynamiquement à partir de ladite image ou séquence d'images.

10. Méthode selon l'une des revendications 1 à 9, ladite séquence d'instructions comportant une succession d'opérations à effectuer avec des organes de réglage tels que une ou plusieurs couronnes, une ou plusieurs tiges de remontoir, et un ou plusieurs boutons-correcteurs.

11. Méthode selon l'une des revendications 1 à 10, dans laquelle la séquence d'instructions consiste en une animation de l'image modélisée du modèle de la pièce d'horlogerie (10) de sorte à indiquer les mouvements à effectuer sur un ou plusieurs organes de réglage sélectionné(s) parmi le groupe d'organes de réglage comprenant une ou plusieurs couronnes, une ou plusieurs tiges de remontoir, et un ou plusieurs boutons-correcteurs.

12. Méthode selon l'une des revendications précédentes, dans laquelle le type de mécanisme à régler est sélectionné parmi le groupe de mécanismes comprenant l'affichage des heures, des minutes, des secondes d'un quantième simple, annuel ou perpétuel, d'un second fuseau horaire, des phases de lune, de la configuration du ciel nocturne ainsi que les mécanismes d'activation/ désactivation d'une alarme, du réglage de l'heure de l'alarme et les fonctions astronomiques.

13. Méthode selon l'une des revendications précédentes, dans laquelle le terminal informatique (20) est un smartphone, une tablette numérique ou un ordinateur.

14. Terminal informatique (20), notamment un smartphone ou une tablette numérique, comprenant un dispositif d'acquisition d'image (22), une zone d'affichage (24), un processeur et une mémoire stockant un programme d'ordinateur comprenant des instructions qui, lorsque le programme est exécuté par le processeur du terminal informatique (20), conduisent celui-ci à mettre en oeuvre la méthode selon l'une des revendications précédentes.

15. Application informatique téléchargeable sur un terminal informatique (20) selon la revendication 14, comprenant des instructions qui, lorsque l'application informatique est exécutée par le terminal informatique, conduisent celui-ci à mettre en oeuvre la méthode selon l'une des revendications 1 à 13.

## Patentansprüche

1. Von einem EDV-Terminal (20) implementiertes Verfahren zur Unterstützung eines Benutzers für die Einstellung eines Mechanismus einer mechanischen Uhr (10), mit mindestens einer Funktion und einer Anzeige eines mit dieser Funktion verbundenen Wertes, wobei das Verfahren die folgenden Schritte umfasst:
- Erfassen eines Bildes oder einer Bildfolge der mechanischen Uhr (10) mittels des EDV-Terminals (20), umfassend eine Bilderfassungseinrichtung (22) und einen Anzeigebereich (24);
- Bestimmen der vorzunehmenden Einstellung des Mechanismus dieser Funktion basierend auf dem besagten Bild oder der besagten Bildfolge, und
- Anzeigen, auf dem Anzeigebereich (24) des EDV-Terminals (20), einer Folge von Anweisungen, die durch den Benutzer auf der Uhr zur Einstellung des besagten Mechanismus auszuführen sind.

2. Verfahren gemäss Anspruch 1, umfassend einen Schritt der Identifizierung des Modells der mechanischen Uhr (10), wobei die Anweisungsfolge von diesem Modell abhängt.

3. Verfahren gemäss Anspruch 2, worin die besagte Identifizierung des Modells der Uhr (10) durch Bilderkennung anhand des besagten Bildes oder der besagten Bildfolge erfolgt.

4. Verfahren gemäss einem der Ansprüche 1 bis 3, umfassend einen Schritt des Bestimmens des einzustellenden Mechanismus unter mehreren von einem Benutzer einstellbaren Mechanismen der Uhr (10).

5. Verfahren gemäss Anspruch 4, wobei die vorzunehmende Einstellung so bestimmt wird, dass die Position eines Indikators des besagten einzustellenden Mechanismus einer vom Benutzer angegebenen oder automatisch ermittelten Referenzzeit entspricht.

6. Verfahren gemäss Anspruch 5, worin die Referenzzeit durch die Uhr des EDV-Terminals (20) oder durch einen entfernten Server (30) vorgegeben wird.

7. Verfahren gemäss einem der Ansprüche 2 bis 6, worin das identifizierte Modell der Uhr (10) im Anzeigebereich (24) des EDV-Terminals (20) mit der Anweisungsfolge zur Einstellung des Mechanismus angezeigt wird.

8. Verfahren gemäss einem der Ansprüche 1 bis 7, wobei die besagte Anweisungsfolge einen Text oder ein Video umfasst, welche zuvor von dem besagten EDV-Terminal aufgezeichnet und wiedergegeben wurde.

9. Verfahren gemäss einem der Ansprüche 1 bis 7, wobei die besagte Anweisungsfolge einen Text oder ein Video umfasst, welche dynamisch anhand des besagten Bildes oder der besagten Bildfolge generiert wird.

10. Verfahren gemäss einem der Ansprüche 1 bis 9, wobei die besagte Anweisungsfolge eine Abfolge von Vorgängen umfasst, welche mit Einstellelementen wie einer oder mehreren Kronen, einer oder mehreren Aufzugswellen und einem oder mehreren Korrekturknöpfen auszuführen sind.

11. Verfahren gemäss einem der Ansprüche 1 bis 10, worin die Anweisungsfolge aus einer Animation des modellierten Bildes des Modells der Uhr (10) besteht, um die Bewegungen anzuzeigen, welche an einem oder mehreren ausgewählten Einstellorganen aus der Gruppe der Einstellelemente, welche eine oder mehrere Kronen, eine oder mehrere Aufzugswellen und einen oder mehrere Korrekturknöpfe umfasst, ausgeführt werden sollen.

12. Verfahren gemäss einem der vorhergehenden Ansprüche, worin die Art des einzustellenden Mechanismus aus der Gruppe der Mechanismen ausgewählt wird, bestehend aus der Anzeige von Stunden, Minuten, Sekunden eines einfachen, jährlichen oder ewigen Kalenders, von einer zweiten Zeitzone, von Mondphasen, von einer Konfiguration des Nachthimmels sowie Mechanismen zum Aktivieren/ Deaktivieren eines Alarms, zum Einstellen der Alarmzeit und astronomische Funktionen.

13. Verfahren gemäss einem der vorhergehenden Ansprüche, worin das EDV-Terminal (20) ein Smartphone, ein digitales Tablet oder ein Computer ist.

14. EDV-Terminal (20), insbesondere ein Smartphone oder digitales Tablet, umfassend eine Bilderfassungseinrichtung (22), einen Anzeigebereich (24), einen Prozessor und einen Speicher, in welchem ein Computerprogramm mit Anweisungen gespeichert ist, die, wenn das Programm vom Prozessor des EDV-Terminals (20) ausgeführt wird, diesen zur Implementierung des Verfahrens gemäss einem der vorhergehenden Ansprüche veranlassen.

15. Computeranwendung, welche auf ein EDV-Terminal (20) gemäss Anspruch 14 herunterladbar ist, umfassend Anweisungen, die, wenn das Programm vom Prozessor des EDV-Terminals ausgeführt wird, diesen zur Implementierung des Verfahrens gemäss einem der Ansprüche 1-13 veranlassen.

## Claims

1. Method carried out by a computer terminal (20) for assisting a user in setting a mechanism of a mechanical timepiece (10) comprising at least one function and a display of a value related to this function, the method comprising the following steps:
- capturing an image or a sequence of images of the mechanical timepiece (10) by means of the computer terminal (20) comprising an image acquisition device (22) and a display area (24);
- determining the setting to be made to the mechanism of this function according to said image or sequence of images, and
- displaying on the display area (24) of the computer terminal (20) a sequence of instructions to be performed by the user on the timepiece for said setting of said mechanism.

2. Method according to claim 1, comprising a step of identifying the model of the mechanical timepiece (10), the sequence of instructions depending on this model.

3. Method according to claim 2, wherein said identification of the model of the timepiece (10) is performed by image recognition from said image or sequence of images.

4. Method according to any of claims 1 to 3, comprising a step of determining the mechanism to be set from among several mechanisms of the timepiece (10) that can be set by a user.

5. Method according to claim 4, the setting to be made being determined so that the position of an indicator of said mechanism to be set corresponds to a reference time indicated by the user or determined automatically.

6. Method according to claim 5, wherein the reference time is given by the clock of the computer terminal (20) or by a remote server (30).

7. Method according to any of claims 2 to 6, wherein the model of the timepiece (10) identified is displayed in the display area (24) of the computer terminal (20) together with the sequence of instructions for setting the mechanism.

8. Method according to any of claims 1 to 7, said sequence of instructions comprising text or video pre-recorded and rendered by said computer terminal.

9. Method according to any one of claims 1 to 7, said sequence of instructions comprising text or video dynamically generated from said image or sequence of images.

10. Method according to any of claims 1 to 9, said sequence of instructions comprising a succession of operations to be performed with setting members such as one or more crowns, one or more winding stems, and one or more corrector buttons.

11. Method according to any of claims 1 to 10, wherein the sequence of instructions consists of an animation of the modelled image of the model of the timepiece (10) so as to indicate the movements to be performed on one or more setting members selected from the group of setting members comprising one or more crowns, one or more winding stems, and one or more corrector buttons.

12. Method according to any preceding claim, wherein the type of mechanism to be set is selected from the group of mechanisms comprising the display of the hours, minutes, seconds of a simple, annual or perpetual calendar, of a second time zone, of the moon phases, of the configuration of the night sky as well as the mechanisms for activating/deactivating an alarm, for setting the alarm time and the astronomical functions.

13. Method according to any preceding claim, wherein the computer terminal (20) is a smartphone, a digital tablet or a computer.

14. Computer terminal (20), in particular a smartphone or a digital tablet, comprising an image acquisition device (22), a display area (24), a processor and a memory storing a computer program comprising instructions which, when the program is executed by the processor of the computer terminal (20), cause the latter to implement the method according to any of the preceding claims.

15. Computer application downloadable to a computer terminal (20) according to claim 14, comprising instructions which, when the computer application is executed by the computer terminal, cause the latter to implement the method according to any of claims 1 to 13.
